# EUROPEAN PATENT APPLICATION

(11) **EP 4 202 636 A2**
(43) Date of publication of application: **28.06.2023**
(21) Application number: 22215724.0
(22) Date of filing: 21.12.2022
(51) Int. Cl.: G06F 3/14, G09G 5/00

(54) **VIRTUAL REALITY SYSTEM, VIRTUAL REALITY DEVICE, ELECTRIC DEVICE AND VIRTUAL REALITY DUAL-MODE SWITCHING METHOD**

(30) Priority: 22.12.2021 CN 202111584095
(71) Applicant: Pimax Technology (Shanghai) Co., Ltd, Shanghai 200120 (CN)
(72) Inventor: Weng, Zhibin, Shanghai, 200120 (CN); Zhou, Ke, Shanghai, 200120 (CN)
(74) Representative: Murgitroyd & Company

(57) **Abstract**

The virtual reality system includes: a first conversion module, configured to convert a video signal received by using a display port into a first video signal; an all-in-one machine control module, where the all-in-one machine control module is configured to output a second video signal, and the all-in-one machine control module is electrically connected to the first conversion module to control running of the first conversion module; a switching module, electrically connected to the first conversion module and the all-in-one machine control module respectively, to switch an operation mode corresponding to the first video signal or the second video signal according to a control instruction of the all-in-one machine control module; and an output apparatus, electrically connected to the switching module, where the output apparatus receives the first video signal or the second video signal and displays a corresponding video picture.

## Description

### TECHNICAL FIELD

The present disclosure relates to the field of virtual reality technologies, and in particular, to a virtual reality system, a virtual reality device, an electronic device and a virtual reality dual-mode switching method.

### BACKGROUND

For existing virtual reality (VR) products, some virtual reality devices that support dual mode of a personal computer-virtual reality (PC-VR) mode and an all-in-one machine are provided to enhance compatibility and universality of the devices. However, for the existing virtual reality devices that support dual mode, a video signal of a personal computer (PC) usually needs to be transmitted to a main control chip of an all-in-one machine by using a USB port, and then the video signal is uniformly transmitted to a display apparatus by the main control chip of the all-in-one machine. Because a signal output by the existing main control chip of the all-in-one machine has a relatively low resolution and usually supports only a 2K resolution at most, a high-definition video picture may not be effectively displayed, which causes low dual-mode switching efficiency of the all-in-one machine, thereby further affecting video output quality and seriously degrading user experience.

### SUMMARY

In view of this, the present disclosure provides a virtual reality system, a virtual reality device, a virtual reality dual-mode switching method, and an electronic device, to normally display a high-definition video picture of a personal computer (for example, a PC).

To resolve the foregoing technical problems, the present disclosure provides a virtual reality system, including: a first conversion module, configured to convert a video signal received by using a display port (DP, a digital display port standard) into a first video signal; an all-in-one machine control module, where the all-in-one machine control module is configured to output a second video signal, and the all-in-one machine control module is electrically connected to the first conversion module to control running of the first conversion module; a switching module, electrically connected to the first conversion module and the all-in-one machine control module respectively, to switch an operation mode corresponding to the first video signal or the second video signal according to a control instruction of the all-in-one machine control module; and an output apparatus, electrically connected to the switching module, where the output apparatus receives the first video signal or the second video signal and displays a corresponding video picture.

In a feasible embodiment, the first conversion module includes a first conversion chip, a first signal input port, and a first signal output port. The first conversion chip may convert, according to the control instruction of the all-in-one machine control module, a video signal received by using the first signal input port into a video signal that may be received (a video signal receivable by an MIPI DSI interface) by using a mobile industry processor interface display serial interface (Mobile Industry Processor Interface Display Serial Interface, MIPI DSI), and output the video signal by using the first signal output port. Specifically, both the first video signal and the second video signal are video signals receivable by an MIPI DSI interface .

In a feasible embodiment, the switching module includes at least one group of signal switching switches. A quantity of signal switching switches in each group is two. Each signal switching switch is electrically connected to the all-in-one machine control module. The two signal switching switches in each group are electrically connected to the same output apparatus.

In a feasible embodiment, a first switching port and a second switching port are disposed in the signal switching switch. Each first switching port is electrically connected to the first signal output port. Any second switching port in each group of signal switching switches is electrically connected to the all-in-one machine control module. According to a control instruction of the all-in-one machine control module, the signal switching switch controls the first switching port to be connected and receive the first video signal, or controls the second switching port electrically connected to the all-in-one machine control module to be connected and receive the second video signal.

In a feasible embodiment, the all-in-one machine control module includes an all-in-one machine main control chip. The all-in-one machine main control chip is provide with at least one all-in-one machine signal output port. Each all-in-one machine signal output port is electrically connected to any second switching port in one corresponding group of signal switching switches. The all-in-one machine main control chip is electrically connected to the first conversion chip and each signal switching switch, to control the first conversion chip and each signal switching switch to operate.

In a feasible embodiment, the output apparatus includes two first displays. There are two groups of signal switching switches. The two signal switching switches in each group are electrically connected to the same first display.

In a feasible embodiment, the virtual reality system further includes: a second conversion module, where the second conversion module includes a second conversion chip, a second signal input port, and a second signal output port, and the second conversion chip may convert a video signal received by using the second signal input port into a video signal receivable by an MIPI DSI interface , and output the video signal by using the second signal output port; and two second displays, where the two second displays are both electrically connected to the second signal output port to display a video signal output by using the second signal output port.

In a feasible embodiment, both the first display and the second display are a 4K liquid crystal display or a 4K light-emitting diode display.

In a feasible embodiment, the virtual reality system further includes: an input module, electrically connected to the all-in-one machine control module, where the input module is configured to input instruction information for triggering a mode switching instruction. The all-in-one machine control module sends the control instruction to the switching module according to the mode switching instruction.

The present disclosure further provides a virtual reality device, including the virtual reality system according to any one of the foregoing embodiments.

The present disclosure further provides a virtual reality dual-mode switching method, applied to the virtual reality system according to any one of the foregoing embodiments. The virtual reality dual-mode switching method includes: receiving a mode switching instruction; determining a target operation mode corresponding to the mode switching instruction; determining whether the target operation mode is an all-in-one machine mode, and generating a first determining result; and if the first determining result is no, controlling a switching module to run in a PC-VR mode (that is, an operation mode in which a virtual reality device is externally connected to a PC); or if the first determining result is yes, controlling a switching module to run in an all-in-one machine mode.

In a feasible embodiment, the controlling a switching module to run in the all-in-one machine mode includes: storing status data information of the current PC-VR mode; fetching status data information of the all-in-one machine mode, and performing initialization; controlling the switching module to be connected to an all-in-one machine control module, and receiving a second video signal; and transmitting the second video signal to a first output apparatus to display a corresponding video picture.

In a feasible embodiment, the controlling a switching module to run in a PC-VR mode includes: storing status data information of the current all-in-one machine mode; fetching status data information of the PC-VR mode, and performing initialization; controlling the switching module to be connected to a first conversion module, and receiving a first video signal; and transmitting the first video signal to a first output apparatus to display a corresponding video picture.

In a feasible embodiment, the virtual reality system further includes an input module electrically connected to an all-in-one machine control module. In the virtual reality dual-mode switching method, before the receiving a mode switching instruction, the method further includes: receiving instruction information for triggering the mode switching instruction

The present disclosure further provides an electronic device, including a processor and a memory configured to store executable instructions of the processor.

The processor is configured to perform the foregoing virtual reality dual-mode switching method.

Beneficial effects of the present disclosure are as follows:

Video display in the two operation modes of the PC-VR mode and the all-in-one machine mode is provided. The mode switching operation may be efficiently performed according to a use requirement, which helps improve efficiency and accuracy of the switching operation. In addition, a high-resolution video picture (for example, a 4K video picture) may be normally displayed in the two operation modes. In this way, resolution degradation of a video signal does not occur, and user experience is improved. In addition, an existing USB port of a main control chip of a virtual reality all-in-one machine does not need to be occupied. The present disclosure may be applied to an existing virtual reality all-in-one machine. An existing all-in-one machine structure does not need to be excessively changed, thereby reducing design costs and modification costs.

### BRIEF DESCRIPTION OF DRAWINGS

FIG 1 is a schematic block diagram of a virtual reality system according to an embodiment of the present disclosure.
FIG 2 is a schematic block diagram of a virtual reality system according to an embodiment of the present disclosure.
FIG 3 is a schematic block diagram of a virtual reality system according to an embodiment of the present disclosure.
FIG 4 is a schematic block diagram of a virtual reality system according to an embodiment of the present disclosure.
FIG 5 is a schematic block diagram of a virtual reality system according to an embodiment of the present disclosure.
FIG 6 is a schematic block diagram of a virtual reality system according to an embodiment of the present disclosure.
FIG 7 is a schematic block diagram of a virtual reality system according to an embodiment of the present disclosure.
FIG 8 is a schematic block diagram of a virtual reality system according to an embodiment of the present disclosure.
FIG 9 is a schematic block diagram of a virtual reality device according to an embodiment of the present disclosure.
FIG 10 is a schematic flowchart of a virtual reality dual-mode switching method according to an embodiment of the present disclosure.
FIG 11 is a schematic flowchart of a virtual reality dual-mode switching method according to an embodiment of the present disclosure.
FIG 12 is a schematic flowchart of a virtual reality dual-mode switching method according to an embodiment of the present disclosure.
FIG 13 is a schematic flowchart of a virtual reality dual-mode switching method according to an embodiment of the present disclosure.
FIG 14 is a schematic flowchart of a virtual reality dual-mode switching method according to an embodiment of the present disclosure.
FIG 15 is a schematic diagram of a structure of an electronic device according to an embodiment of the present disclosure.

### DETAILED DESCRIPTIONS OF THE EMBODIMENTS

In the descriptions of the present disclosure, "a plurality of" means at least two, for example, two or three, unless otherwise specifically stated. All directional indications (such as up, down, left, right, front, back, top, or bottom) in the embodiments of the present disclosure are only used to explain relative position relationships, motion statuses, and the like of components in a specific posture (as shown in the accompanying drawings). If the specific posture changes, the directional indications change accordingly. In addition, the terms "include", "comprise", and any variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

In addition, the term "embodiment" mentioned in this specification means that specific features, structures, or characteristics in combination with the descriptions of the embodiments may be incorporated in at least one embodiment of the present disclosure. The word "embodiment" in various positions in this specification does not necessarily indicate a same embodiment, or an independent or alternative embodiment that is exclusive of other embodiments. A person skilled in the art explicitly and implicitly understands that the embodiments described herein may be combined with another embodiment.

The following clearly and completely describes the technical solutions in the embodiments of the present disclosure with reference to the accompanying drawings in the embodiments of the present disclosure. Apparently, the described embodiments are merely some but not all of the embodiments of the present disclosure. All other embodiments obtained by a person of ordinary skill in the art based on the embodiments of this disclosure without creative efforts fall within the protection scope of this disclosure.

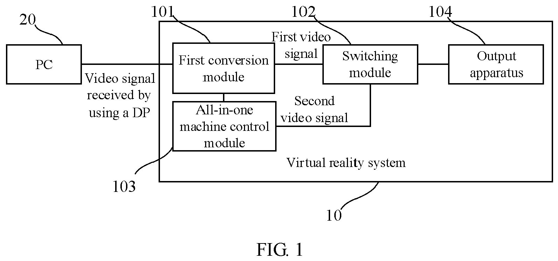

As shown in FIG 1, the present disclosure provides a virtual reality system 10 that may be applied to a virtual reality device, to implement switching between two operation modes of a PC-VR mode and an all-in-one machine mode, thereby outputting a high-resolution video picture.

In an embodiment of the present disclosure, as shown in FIG 1, the virtual reality system 10 includes a first conversion module 101, an all-in-one machine control module 103, a switching module 102, and an output apparatus 104. The first conversion module 101 is configured to: connect a computer device, for example, a PC 20, to perform a signal conversion operation on a video signal received by using a DP port; and output a first video signal. The all-in-one machine control module 103 can output a second video signal. Both the first video signal and the second video signal are a video signal that may be normally received and displayed by the output apparatus. The all-in-one machine control module 103 is further electrically connected to the first conversion module 101, to control running of the first conversion module 101. The switching module 102 is electrically connected to the first conversion module 101 and the all-in-one machine control module 103 respectively, and performs a switching operation between operation modes according to a control instruction of the all-in-one machine control module 103, to receive the first video signal of the first conversion module 101 in the PC-VR mode or receive the second video signal of the all-in-one machine control module 103 in the all-in-one machine mode according to a use requirement, thereby implementing the dual operation mode switching operation. The output apparatus 104 is electrically connected to the switching module 102. The switching module 102 transmits a video signal to the output apparatus 104, and displays a corresponding video picture by using the output apparatus 104.

In the PC-VR mode, the switching module 102 receives the first video signal output by the first conversion module 101, transmits the first video signal to the output apparatus 104, and displays the corresponding video picture. In the all-in-one machine mode, the switching module 102 receives the second video signal output by the all-in-one machine control module 103, transmits the second video signal to the output apparatus 104, and displays the corresponding video picture.

It should be noted that the electrical connection described in the embodiments of the present disclosure includes but is not limited to a communication connection. Specifically, the communication connection includes a wired communication connection and a wireless communication connection.

When the virtual reality system 10 in the present disclosure is applied to a virtual reality device, the PC-VR mode and the all-in-one machine mode are independent of each other. A high-resolution video signal (for example, a 4K video signal) output by the PC 20 can be normally transmitted, thereby displaying a high-resolution video picture. In this way, resolution degradation does not occur, and a USB port of an all-in-one machine does not need to be occupied, thereby effectively improving user experience. In addition, the all-in-one machine control module 103 can control the switching module 102 according to a use requirement, and perform a corresponding mode switching operation, to implement higher mode switching efficiency.

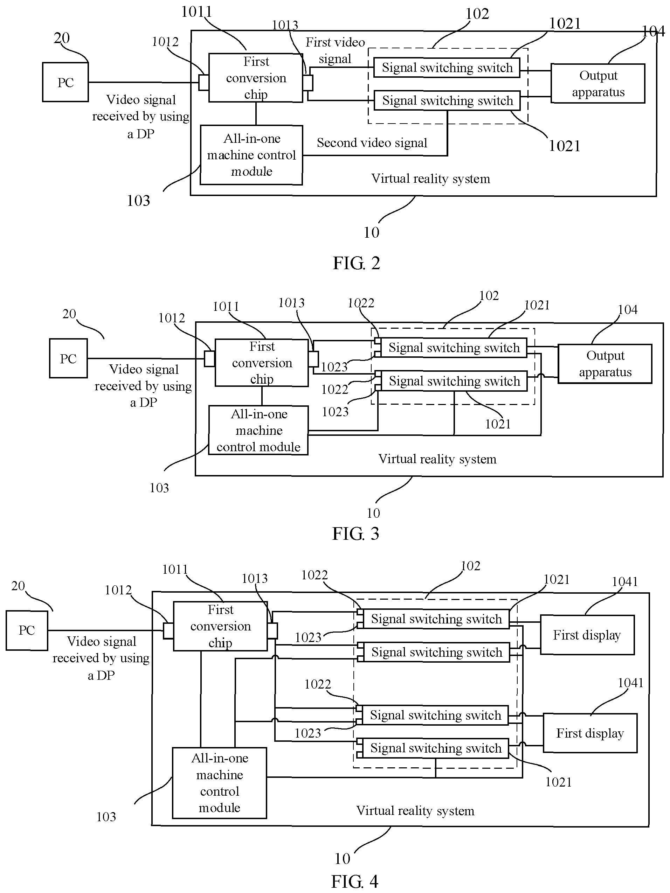

In some embodiments of the present disclosure, as shown in FIG 2, the first conversion module 101 specifically includes a first conversion chip 1011, a first signal input port 1012, and a first signal output port 1013. The first conversion chip 1011 is respectively connected to the first signal input port 1012 and the first signal output port 1013, to implement signal input and output. Specifically, the first conversion chip 1011 may be a converter, for example, a signal conversion chip (DP bridge chip), to convert a DP signal to a MIPI signal. This is not limited in the present disclosure. The first signal input port 1012 is configured to connect the PC 20 to receive a video signal, especially a high-resolution video signal (for example, a 4K video signal). The first conversion chip 1011 converts the video signal received by using the DP port into the first video signal under control of the all-in-one machine control module 103. The first video signal is a video signal receivable by an MIPI DSI interface , and is transmitted to the switching module 102 by using the first signal output port 1013. In comparison with an existing virtual reality device, in the PC-VR mode, the video signal received by using the DP interface does not need to be transmitted by using the all-in-one machine control module 103. In this way, resolution degradation of the video signal does not occur, and a high-definition video picture may be directly displayed, thereby implementing a relatively good effect. The first signal input port 1012 may be specifically a DP port, and has relatively strong universality and is convenient for use.

In some embodiments of the present disclosure, as shown in FIG 2, the switching module 102 specifically includes at least one group of signal switching switches 1021. A quantity of signal switching switches 1021 in each group is two. The two signal switching switches 1021 are electrically connected to the same output apparatus 104, to meet a specification requirement of the output apparatus 104 and support a high-resolution 4K video picture. Each signal switching switch 1021 is electrically connected to the all-in-one machine control module 103, and performs a switching operation under control of the all-in-one machine control module 103.

Specifically, the signal switching switch 1021 may be a MIPI switch. This is not limited in the present disclosure.

In some embodiments of the present disclosure, as shown in FIG 3, a first switching port 1022 and a second switching port 1023 are disposed on the signal switching switch 1021. The all-in-one machine control module 103 sends a control instruction to the signal switching switch 1021 according to a use requirement. The signal switching switch 1021 controls, according to a control instruction, the first switching port 1022 or the second switching port 1023 to be connected, to receive the first video signal when the first switching port 1022 is connected and receive the second video signal when the second switching port 1023 is connected, thereby implementing independent running of the two operation modes and preventing an impact on resolution of a video signal.

Specifically, as shown in FIG 3, two first switching ports 1022 in each group of signal switching switches 1021 are both electrically connected to the first signal output port 1013. Any second switching port 1023 in each group of signal switching switches 1021 is electrically connected to the all-in-one machine control module 103. When it is required to operate in the PC-VR mode, the signal switching switch 1021 controls, according to a control instruction, the first switching port 1022 to be connected. The first video signal is transmitted to the output apparatus 104 in terms of two channels of signals by using the two first switching ports 1022. When it is required to operate in the all-in-one machine mode, the signal switching switch 1021 controls, according to a control instruction, the second switching port 1023 to be connected. The second video signal is transmitted to the output apparatus 104 by using the corresponding second switching port 1023.

Further, as shown in FIG 4, the output apparatus 104 includes two first displays 1041. Correspondingly, there are two groups of signal switching switches 1021. Each group of signal switching switches 1021 is electrically connected to the corresponding first display 1041, to transmit a video signal to the first display 1041. When a 4K video signal is transmitted in the PC-VR mode, dual 4K high-definition video picture can be displayed, to implement a better picture effect, thereby effectively improving user experience.

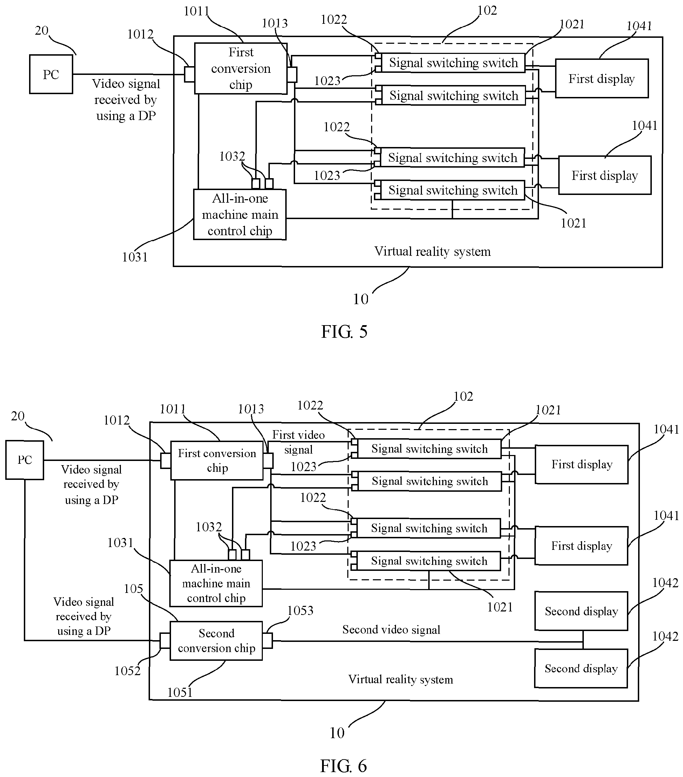

In some embodiments of the present disclosure, as shown in FIG 5, the all-in-one machine control module 103 includes an all-in-one machine main control chip 1031, and the all-in-one machine main control chip 1031 is provided with at least one all-in-one machine signal output port 1032. One second switching port 1023 in each group of signal switching switches 1021 is electrically connected to the all-in-one machine signal output port 1032, to receive the second video signal in the all-in-one machine mode. For example, in an example of FIG 5, there are two groups of signal switching switches 1021, and correspondingly, a quantity of all-in-one machine signal output ports 1032 is also two. Certainly, a quantity of all-in-one machine signal output ports 1032 may alternatively be one or more based on different quantities of displays of the output apparatus 104 and different quantities of groups of signal switching switches 1021. This is not limited to the example in this embodiment. It should be noted that, because a main control chip of an existing virtual reality all-in-one machine generally supports two output apparatuses 104, an interface configuration of the existing virtual reality all-in-one machine may be fully used in the solutions of this embodiment to improve user experience as much as possible.

In some embodiments of the present disclosure, as shown in FIG 6, the virtual reality system 10 further includes a second conversion module 105 and two second displays 1042. The second conversion module 105 specifically includes a second conversion chip 1051, and a second signal input port 1052 and a second signal output port 1053 that are electrically connected to the second conversion chip 1051. The second signal input port 1052 is configured to electrically connect a computer device such as the PC 20. The second conversion chip 1051 can convert a video signal received by using the DP port into a video signal receivable by an MIPI DSI interface . The second signal output port 1053 is electrically connected to the two second displays 1042, to transmit the video signal receivable by an MIPI DSI interface to the two second displays 1042 and display a corresponding video picture by using the second displays 1042. The second conversion module 105 and the second display 1042 in this embodiment may be used as supplements to the all-in-one machine mode. In the all-in-one machine mode, a video signal from the PC 20 is simultaneously displayed by using the second displays 1042 according to a use requirement, to provide more options for a user, thereby further improving user experience.

In some embodiments of the present disclosure, the first display 1041 may be a 4K liquid crystal display (4K LCD) (as shown in FIG 6), or the first display 1041 may be a 4K light-emitting diode display (4K LED display), to support display of a 4K video picture.

Further, the second display 1042 may also be a 4K liquid crystal display (4K LCD) or a 4K light-emitting diode display (4K LED display).

Certainly, the first display 1041 or the second display 1042 may alternatively use another form of video display apparatus. This is not limited to the examples in this embodiment.

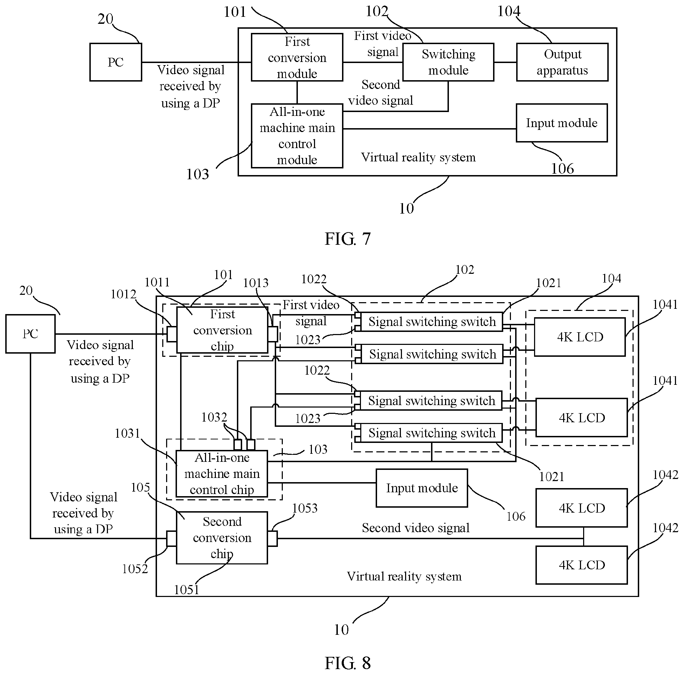

In some embodiments of the present disclosure, as shown in FIG 7, the virtual reality system 10 further includes an input module 106. The input module 106 is electrically connected to the all-in-one machine control module 103. The input module 106 may provide input instruction information to trigger a mode switching instruction. After receiving the mode switching instruction, the all-in-one machine control module 103 sends a corresponding control instruction to the switching module 102, to control the switching module 102 to perform a mode switching operation. Specifically, the input module 106 includes but is not limited to an operation button, a switch, a PC having a software input interface (for example, a desktop computer, a laptop computer, or a tablet computer), or a terminal device (for example, a mobile phone or a palmtop computer). In addition, the electrical connection between the input module 106 and the all-in-one machine control module 103 may be a communication connection formed in a wired or wireless manner.

The following is a specific embodiment of the virtual reality system of the present disclosure.

As shown in FIG 8, a virtual reality system 10 includes a first conversion module 101, an all-in-one machine control module 103, a switching module 102, an output apparatus 104, and an input module 106. The first conversion module 101 specifically includes a first conversion chip 1011, a first signal input port 1012, and a first signal output port 1013. The switching module 102 specifically includes two groups of signal switching switches 1021. A quantity of signal switching switches 1021 in each group is two. The all-in-one machine control module 103 includes an all-in-one machine main control chip 1031. Two all-in-one machine signal output ports 1032 are disposed in the all-in-one machine main control chip 1031. The output apparatus 104 specifically includes two first displays 1041.

The all-in-one machine main control chip 1031 is electrically connected to the first conversion chip 1011 and each signal switching switch 1021, to control running of the first conversion chip 1011 and the signal switching switch 1021. A first switching port 1022 and a second switching port 1023 are disposed on each signal switching switch 1021. The all-in-one machine main control chip 1031 sends a control instruction to the signal switching switch 1021 according to a use requirement. The signal switching switch 1021 controls the first switching port 1022 or the second switching port 1023 to be connected. Specifically, two first switching ports 1022 in each group of signal switching switches 1021 are both electrically connected to the first signal output port 1013. Any second switching port 1023 in each group of signal switching switches 1021 is electrically connected to the all-in-one machine signal output port 1032 of the all-in-one machine control module 103. The two signal switching switches 1021 in each group are electrically connected to a same first display 1041.

The input module 106 is electrically connected to the all-in-one machine control module 103, and is configured to input instruction information that may trigger a mode switching instruction. The input module 106 includes but is not limited to an operation button, a switch, a PC having a software input interface (for example, a desktop computer, a laptop computer, or a tablet computer), or a terminal device (for example, a mobile phone or a palmtop computer).

In an operation status, the first signal input port 1012 is electrically connected to the PC 20. When it is required to operate in a PC-VR mode, the instruction information may be input by using the input module 106, to trigger the corresponding mode switching instruction. After receiving the corresponding mode switching instruction, the all-in-one machine main control chip 1031 sends a control instruction to the signal switching switch 1021. The signal switching switch 1021 controls, according to the control instruction, the first switching port 1022 to be connected. The first signal input port 1012 receives a video signal of the PC 20. The first switching chip 1011 converts a signal received by using a DP port into a video signal receivable by an MIPI DSI interface , and outputs the video signal in a form of a first video signal by using the first switching port 1022. The first video signal is transmitted to the first display 1041 by using the signal switching switch 1021 for displaying a corresponding video picture. When it is required to operate in an all-in-one machine mode, the instruction information may be input by using the input module 106, to trigger the corresponding mode switching instruction. After receiving the corresponding mode switching instruction, the all-in-one machine main control chip 1031 sends a control instruction to the signal switching switch 1021. The signal switching switch 1021 controls, according to the control instruction, the second switching port 1023 to be connected. The all-in-one machine main control chip 1031 outputs a second video signal by using the all-in-one machine signal output port 1032. Then, the second video signal is transmitted to the first display 1041 by using the second switching port 1023 and the signal switching switch 1021 for displaying a corresponding video picture. The second video signal is a video signal receivable by an MIPI DSI interface .

Further, the virtual reality system 10 further includes a second conversion module 105 and two second displays 1042. The second conversion module 105 specifically includes a second conversion chip 1051, and a second signal input port 1052 and a second signal output port 1053 that are electrically connected to the second conversion chip 1051. The second signal input port 1052 is electrically connected to the PC 20. The second conversion chip 1051 can convert a video signal received by using the DP port into a video signal receivable by an MIPI DSI interface . The second signal output port 1053 is electrically connected to the two second displays 1042, to directly transmit the video signal receivable by an MIPI DSI interface to the two second displays 1042 and display a corresponding video picture by using the second displays 1042. This is a supplement to the all-in-one machine mode. In this way, in the all-in-one machine mode, according to a use requirement, the second video signal from an all-in-one machine is displayed by using the first displays 1041, and the video signal from the PC 20 is displayed by using the second displays 1042.

Specifically, the second conversion chip 1051 may be a converter, for example, a signal conversion chip (DP bridge chip), to convert a DP signal to a MIPI signal. This is not limited in the present disclosure.

The first display 1041 and the second display 1042 each are a 4K liquid crystal display (4K LCD).

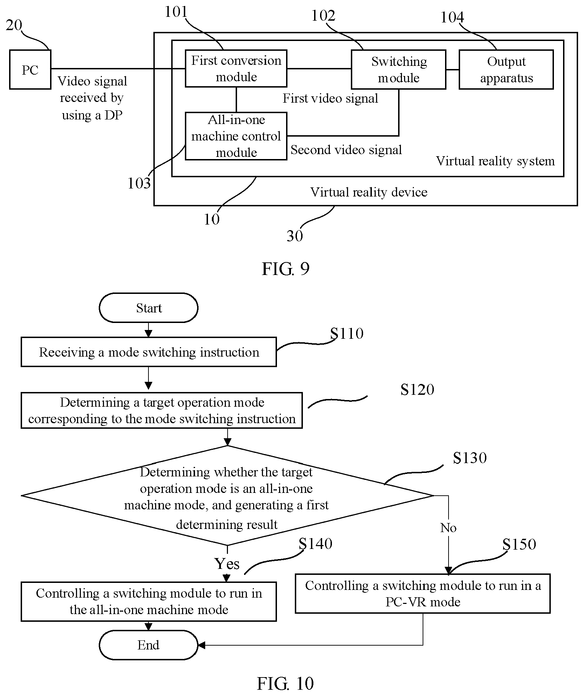

An embodiment of the present invention further provides a virtual reality device 30. As shown in FIG 9, the virtual reality device 30 includes the virtual reality system 10 in any one of the foregoing embodiments, to implement switching between two operation modes: a PC-VR mode and an all-in-one machine mode, thereby meeting different use requirements. Because the two operation modes operate independently, in the PC-VR mode, the PC 20 outputs a high-resolution video signal (for example, a 4K video signal). The first conversion module in the virtual reality system may convert a video signal received by using the DP port to a video signal receivable by an MIPI DSI interface , and transmit the video signal receivable by an MIPI DSI interface to the output apparatus 104. Resolution of the video signal in the transmission process is not affected. The output apparatus 104 can normally display a high-resolution video picture, to implement a good picture effect, thereby effectively improving user experience. In addition, a USB port of an all-in-one machine does not need to be occupied. A structure and an interface configuration of the existing virtual reality all-in-one machine may be fully used, which facilitates reducing designs and lowering the conversion costs.

In addition, the virtual reality device in this embodiment further has all the beneficial effects of the virtual reality system in any one of the foregoing embodiments. Details are not described herein again.

An embodiment of the present disclosure provides a virtual reality dual-mode switching method, applied to the virtual reality system in any one of the foregoing embodiments. As shown in FIG 10, the virtual reality dual-mode switching method includes the following steps.

Step S 110: Receiving a mode switching instruction.

Step S120: Determining a target operation mode corresponding to the mode switching instruction.

Step S130: Determining whether the target operation mode is an all-in-one machine mode, and generating a first determining result; and if the first determining result is yes, performing Step S140; or if the first determining result is no, performing Step S150.

Step S140: Controlling a switching module to run in the all-in-one machine mode.

Step S150: Controlling a switching module to run in a PC-VR mode.

In this embodiment, the target operation mode corresponding to the mode switching instruction is first determined in Step S110 and Step S120, and then the target operation mode is compared with the all-in-one machine mode to determine a direction for the mode switching operation in Step S130, that is, switching from the all-in-one machine mode to the PC-VR mode (that is, an operation mode in which a virtual reality device is externally connected to a PC) or switching from the PC-VR mode to the all-in-one machine mode. If the target operation mode is the all-in-one machine mode, the switching module is controlled to run in the all-in-one machine mode. If the target operation mode is not the all-in-one machine mode, it indicates that the target operation mode is the PC-VR mode. In this case, the switching module is controlled to run in the PC-VR mode. An input form of the mode switching instruction includes but is not limited to voice input, interface input, and button input.

In the virtual reality dual-mode switching method in this embodiment, a high-efficient mode switching operation can be performed as required, to implement dual operation mode of the virtual reality system, thereby improving efficiency and accuracy of the mode switching operation. In addition, the virtual reality dual-mode switching method in this embodiment further has all the beneficial effects of the virtual reality system in any one of the foregoing embodiments. Details are not described herein again.

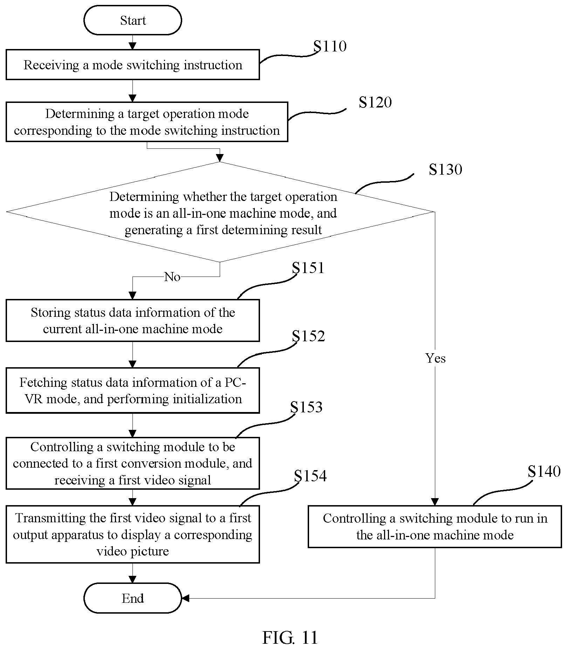

An embodiment of the present disclosure provides a virtual reality dual-mode switching method, applied to the virtual reality system in any one of the foregoing embodiments. As shown in FIG 11, the virtual reality dual-mode switching method includes the following steps.

Step S110: Receiving a mode switching instruction.

Step S120: Determining a target operation mode corresponding to the mode switching instruction.

Step S130: Determining whether the target operation mode is an all-in-one machine mode, and generating a first determining result; and if the first determining result is yes, performing Step S140; or if the first determining result is no, performing Step S151 to Step S154.

Step S140: Controlling a switching module to run in the all-in-one machine mode.

Step S151: Storing status data information of the current all-in-one machine mode.

Step S152: Fetching status data information of a PC-VR mode, and performing initialization.

Step S153: Controlling a switching module to be connected to a first conversion module, and receiving a first video signal.

Step S154: Transmitting the first video signal to a first output apparatus to display a corresponding video picture.

In the virtual reality dual-mode switching method in this embodiment, an improvement is further made on Step S150 of the foregoing embodiment. Specifically, when it is required to switch from the all-in-one machine mode to the PC-VR mode, the current status data information of the all-in-one machine mode is stored in Step S151 and Step S152 for subsequent use, and then the status data information of the PC-VR mode is fetched to prepare for the mode switching operation. A video signal received by using a DP port of a PC is converted, by using the first conversion module, to a video signal that may be received by using a MIPI DSI, as the first video signal. In Step S153, the switching module is connected to the first conversion module, to implement mode switching. In this case, the all-in-one machine mode is in a sleep state, and the PC-VR mode is in an operation state. Further, in Step S154, the first video signal is transmitted to the output device by using the switching module, to display a video picture corresponding to the first video signal. In addition, the virtual reality dual-mode switching method in this embodiment further has all the beneficial effects of the virtual reality system in any one of the foregoing embodiments. Details are not described herein again.

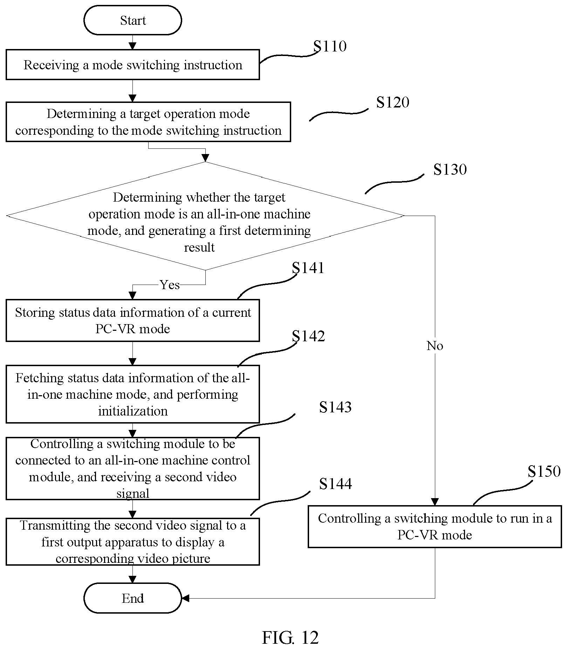

An embodiment of the present disclosure provides a virtual reality dual-mode switching method, applied to the virtual reality system in any one of the foregoing embodiments. As shown in FIG 12, the virtual reality dual-mode switching method includes the following steps.

Step S110: Receiving a mode switching instruction.

Step S120: Determining a target operation mode corresponding to the mode switching instruction.

Step S130: Determining whether the target operation mode is an all-in-one machine mode, and generating a first determining result; and if the first determining result is yes, performing Step S141 to Step S144; or if the first determining result is no, performing Step S150.

Step S141: Storing status data information of a current PC-VR mode.

Step S142: Fetching status data information of the all-in-one machine mode, and performing initialization.

Step S143: Controlling a switching module to be connected to an all-in-one machine control module, and receiving a second video signal.

Step S144: Transmitting the second video signal to a first output apparatus to display a corresponding video picture.

Step S150: Controlling a switching module to run in a PC-VR mode.

In the virtual reality dual-mode switching method in this embodiment, an improvement is further made on Step S140 of the foregoing embodiment. Specifically, when it is required to switch from the PC-VR mode to the all-in-one machine mode, the current status data information of the PC-VR mode is stored in Step S141 and Step S142 for subsequent use, and then the status data information of the all-in-one machine mode is fetched to prepare for the mode switching operation. The all-in-one machine control module itself can output the second video signal and the second video signal is a video signal that may be received by using a MIPI DSI. In Step S143, the switching module is connected to the all-in-one machine control module, to implement mode switching. In this case, the PC-VR mode is in a sleep state, and the all-in-one machine mode is in an operation state. Further, in Step S144, the second video signal is transmitted to the output device by using the switching module, to display a video picture corresponding to the second video signal. In addition, the virtual reality dual-mode switching method in this embodiment further has all the beneficial effects of the virtual reality system in any one of the foregoing embodiments. Details are not described herein again.

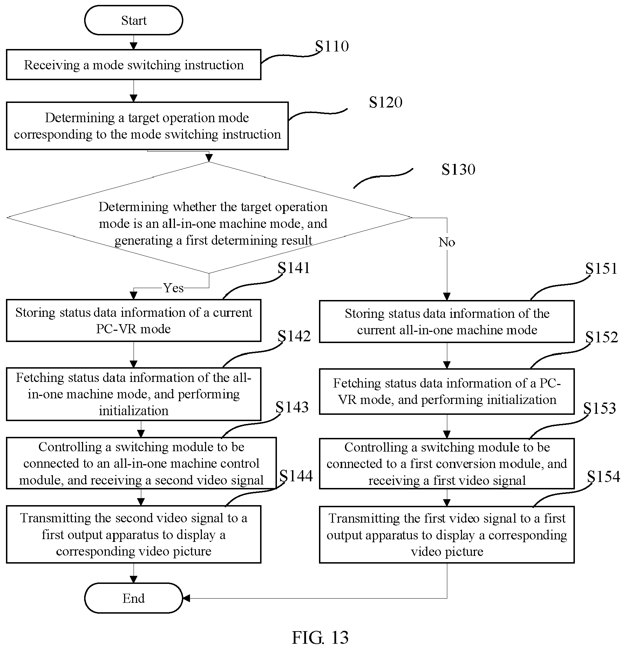

An embodiment of the present disclosure provides a virtual reality dual-mode switching method, applied to the virtual reality system in any one of the foregoing embodiments. As shown in FIG 13, the virtual reality dual-mode switching method includes the following steps.

Step S 110: Receiving a mode switching instruction.

Step S120: Determining a target operation mode corresponding to the mode switching instruction.

Step S130: Determining whether the target operation mode is an all-in-one machine mode, and generating a first determining result; and if the first determining result is yes, performing Step S141 to Step S144; or if the first determining result is no, performing Step S151 to Step S154.

Step S141: Storing status data information of a current PC-VR mode.

Step S142: Fetching status data information of the all-in-one machine mode, and performing initialization.

Step S143: Controlling a switching module to be connected to an all-in-one machine control module, and receiving a second video signal.

Step S144: Transmitting the second video signal to a first output apparatus to display a corresponding video picture.

Step S151: Storing status data information of the current all-in-one machine mode.

Step S152: Fetching status data information of a PC-VR mode, and performing initialization.

Step S153: Controlling a switching module to be connected to a first conversion module, and receiving a first video signal.

Step S154: Transmitting the first video signal to a first output apparatus to display a corresponding video picture.

In the virtual reality dual-mode switching method in this embodiment, an improvement is further made on Step S140 and Step S150 of the foregoing embodiment, and specific step content is the same as the step content in the foregoing embodiments. Details are not described again. In addition, the virtual reality dual-mode switching method in this embodiment further has all the beneficial effects of the virtual reality system in any one of the foregoing embodiments. Details are not described herein again.

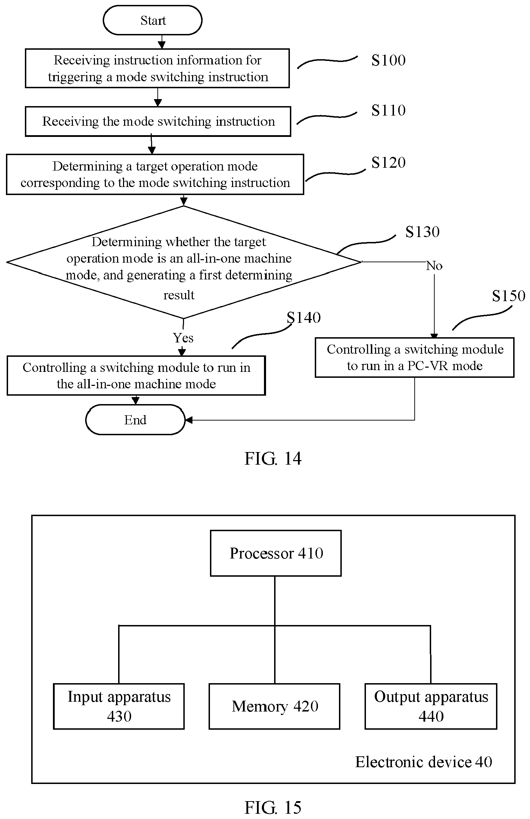

An embodiment of the present disclosure provides a virtual reality dual-mode switching method, applied to the virtual reality system in any one of the foregoing embodiments. As shown in FIG 14, the virtual reality dual-mode switching method includes the following steps.

Step S100: Receiving instruction information for triggering a mode switching instruction.

Step S110: Receiving the mode switching instruction.

Step S120: Determining a target operation mode corresponding to the mode switching instruction.

Step S130: Determining whether the target operation mode is an all-in-one machine mode, and generating a first determining result; and if the first determining result is yes, performing Step S140; or if the first determining result is no, performing Step S150.

Step S140: Controlling a switching module to run in the all-in-one machine mode.

Step S150: Controlling a switching module to run in a PC-VR mode.

In this embodiment, Step S100 is added before the method steps in the foregoing embodiment. The instruction information is input to trigger the mode switching instruction. Then subsequent method steps are performed, to match a use requirement of a user. In this way, the user may select, according to an actual status, whether mode switching needs to be performed. When Step S 100 is not performed, it indicates that the user does not require mode switching in this case. In this case, the virtual reality system keeps a current running status.

As described above, an all-in-one machine control module 103 includes an all-in-one machine main control chip 1031. One or more computer program instructions may be stored in the all-in-one machine main control chip 1031. The program instructions are run to implement the virtual reality dual-mode switching method and/or another expected function in the foregoing embodiments of the present disclosure. The all-in-one machine main control chip 1031 may further store various content including, for example, status data information of the PC-VR mode and status data information of the all-in-one machine mode.

FIG 15 is a schematic diagram of a structure of an electronic device according to an embodiment of this application. As shown in FIG 15, the electronic device 40 includes one or more processors 410 and a memory 420.

The processor 410 may be a central processing unit (CPU) or another form of processing unit that has a data processing capability and/or an instruction execution capability, and may control another component in the electronic device 40 to perform an expected function.

The memory 420 may include one or more computer program products. The computer program products may include various forms of computer-readable storage media, for example, a volatile memory and/or non-volatile memory. The volatile memory may include, for example, a random access memory (RAM) and/or a high-speed cache (cache). The non-volatile memory may include, for example, a read-only memory (ROM), a hard disk, and a flash memory. One or more computer program instructions may be stored in the computer-readable storage medium. The processor 410 may run the program instructions to implement the virtual reality dual-mode switching method and/or another expected function in the foregoing embodiments of this application. The computer-readable storage medium may further store various content including, for example, status data information of the PC-VR mode and status data information of the all-in-one machine mode.

In an example, the electronic device 40 may further include an input apparatus 430 and an output apparatus 440. These components may be interconnected by using a bus system and/or another form of connection mechanism (not shown).

The input apparatus 430 may include, for example, a keyboard and a mouse.

The output apparatus 440 may output, to the external, various information including prompt information and the like. The output apparatus 440 may include, for example, a display, a loudspeaker, a printer, a communication network, and a remote output device connected to the communication network.

Certainly, for simplification, FIG 15 shows merely some components related to this application in the electronic device 40. Components such as a bus and an input/output interface are omitted. In addition, according to a specific application status, the electronic device 40 may further include any other proper component.

In addition, an embodiment of this application may further provide a computer-readable storage medium. A computer program instruction is stored in the computer-readable storage medium. When the computer program instruction is run by a processor, the processor is enabled to perform the steps in the virtual reality dual-mode switching method, described in this specification, in the foregoing embodiments of this application.

The foregoing describes a basic principle of the present disclosure with reference to the specific embodiments. However, it should be noted that the advantages, merits, effects, and the like mentioned in the present disclosure are merely examples instead of limitations. It may not be considered that the advantages, merits, effects, and the like are required in the embodiments of the present disclosure. In addition, specific details of the present disclosure are merely used as an example for ease of understanding instead of limitations. The foregoing details do not limit the present disclosure to be implemented by using the foregoing specific details.

The block diagrams of components, apparatuses, devices, and systems involved in the present disclosure are merely illustrative examples and do not require or imply that connections, arrangements, and configurations need to be implemented in manners shown in the block diagrams. A person skilled in the art will recognize that these components, apparatuses, devices, and systems may be connected, arranged, and configured in any manner. Words such as "include", "comprise", and "have" are open words indicating "include but not be limited to", and may be used interchangeably with "include but not be limited to". The words "or" and "and" used herein indicate a word "and/or", and may be used interchangeably with "and/or", unless the context expressly indicates otherwise. The word "for example" used herein indicates a phrase "for example but not limited to", and may be used interchangeably with "for example but not limited to".

It should be further noted that in the apparatus and the device in the present disclosure, the components may be decomposed and/or recombined. The decomposition and/or the recombination shall be considered equivalent solutions to the present disclosure.

The computer program product of the present disclosure may write, in any combination of one or more program design languages, program code used to perform operations in the embodiments of the present disclosure. The program design languages include an object-oriented program design language such as Java or C++, and further include a conventional process program design language such as a "C" language or a similar program design language. The program code may be fully executed on a user computing device, or some may be executed on user equipment as a standalone software package, or some may be executed on a user computing device while some may be executed on a remote computing device, or all the program code may be executed on a remote computing device or a server.

The readable storage medium in the present disclosure may use any combination of one or more readable media. The readable medium may be a readable signal medium or a readable storage medium. The readable storage medium may include but is not limited to, for example, an electronic, a magnetic, an optical, an electromagnetic, an infrared, or a semiconductor system, apparatus, or component, or any proper combination of the foregoing content. A more specific example (a non-exhaustive list) of the readable storage medium includes an electrical connection based on one or more conducting wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage component, a magnetic storage component, or any proper combination of the foregoing content.

The foregoing description of the disclosed aspects is provided to enable any person skilled in the art to implement or use the present disclosure. Various modifications to these aspects are obvious to a person skilled in the art. General principles defined herein may be applied to other aspects without departing from the scope of the present disclosure. Therefore, the present disclosure is limited to the aspects shown herein, but to the widest range consistent with the principles and novel features disclosed herein.

The foregoing descriptions are merely preferable embodiments of the present disclosure, but are not intended to limit the present disclosure. Any modification, equivalent replacement, or improvement made without departing from the spirit and principle of the present disclosure shall fall within the protection scope of this application.

## Claims

1. A virtual reality system, **characterized by**, comprising:
a first conversion module, configured to convert a video signal received by using a display port into a first video signal;
an all-in-one machine control module, wherein the all-in-one machine control module is configured to output a second video signal, and the all-in-one machine control module is electrically connected to the first conversion module to control running of the first conversion module;
a switching module, electrically connected to the first conversion module and the all-in-one machine control module respectively, to switch an operation mode corresponding to the first video signal or the second video signal according to a control instruction of the all-in-one machine control module; and
an output apparatus, electrically connected to the switching module, wherein the output apparatus is configured to receive the first video signal or the second video signal and displays a corresponding video picture.

2. The virtual reality system according to claim 1, wherein
the first conversion module comprises a first conversion chip, a first signal input port, and a first signal output port,
the first conversion chip is configured to convert a video signal received by using the first signal input port into a video signal receivable by an MIPI DSI interface according to the control instruction of the all-in-one machine control module, and outputs the video signal by using the first signal output port.

3. The virtual reality system according to claim 1 or 2, wherein
the switching module comprises at least one group of signal switching switches, there are two signal switching switches in each group, each signal switching switch is electrically connected to the all-in-one machine control module, and both the two signal switching switches in each group are electrically connected to the output apparatus.

4. The virtual reality system according to claim 3, wherein
a first switching port and a second switching port are disposed in the signal switching switch, each first switching port is electrically connected to the first signal output port, and any second switching port in each group of signal switching switches is electrically connected to the all-in-one machine control module,
the signal switching switch is configured to control the first switching port to be connected and receive the first video signal, or controls the second switching port electrically connected to the all-in-one machine control module to be connected and receive the second video signal, according to a control instruction of the all-in-one machine control module.

5. The virtual reality system according to claim 4, wherein
the all-in-one machine control module comprises an all-in-one machine main control chip, and the all-in-one machine main control chip is provided with at least one all-in-one machine signal output port,
each all-in-one machine signal output port is electrically connected to any second switching port in one corresponding group of signal switching switches, and the all-in-one machine main control chip is electrically connected to the first conversion chip and each signal switching switch, to control the first conversion chip and each signal switching switch to operate.

6. The virtual reality system according to any one of claims 1 to 5, wherein
the output apparatus comprises two first displays; and
there are two groups of signal switching switches, and both the two signal switching switches in each group are electrically connected to the first display.

7. The virtual reality system according to any one of claims 1 to 6, further comprising:
a second conversion module, comprising a second conversion chip, a second signal input port, and a second signal output port, wherein the second conversion chip is configured to convert a video signal received by using the second signal input port into a video signal receivable by an MIPI DSI interface, and output the video signal by using the second signal output port; and
two second displays, wherein the two second displays are both electrically connected to the second signal output port to display a video signal output by using the second signal output port.

8. The virtual reality system according to claim 6 or 7, wherein
both the first display and the second display are a 4K liquid crystal display or a 4K light-emitting diode display.

9. The virtual reality system according to any one of claims 1-8, further comprising:
an input module, electrically connected to the all-in-one machine control module, wherein the input module is configured to input instruction information for triggering a mode switching instruction, and
the all-in-one machine control module sends the control instruction to the switching module according to the mode switching instruction.

10. A virtual reality device, characteried by, comprising:
the virtual reality system according to any one of claims 1 to 9.

11. A virtual reality dual-mode switching method, applied to the virtual reality system according to any one of claims 1 to 9 and **characterized by**, comprising:
receiving a mode switching instruction;
determining a target operation mode corresponding to the mode switching instruction;
determining whether the target operation mode is an all-in-one machine mode, and generating a first determining result; and
if the first determining result is no, controlling the switching module to run in a PC-VR mode; or
if the first determining result is yes, controlling the switching module to run in the all-in-one machine mode.

12. The virtual reality dual-mode switching method according to claim 11, wherein the controlling the switching module to run in the all-in-one machine mode comprises:
storing status data information of the current PC-VR mode;
fetching status data information of the all-in-one machine mode, and performing initialization;
controlling the switching module to be in communication with an all-in-one machine control module, and receiving a second video signal; and
transmitting the second video signal to a first output apparatus to display a corresponding video picture.

13. The virtual reality dual-mode switching method according to claim 11, wherein the controlling the switching module to run in a PC-VR mode comprises:
storing status data information of the current all-in-one machine mode;
fetching status data information of the PC-VR mode, and performing initialization;
controlling the switching module to be in communication with the first conversion module, and receiving a first video signal; and
transmitting the first video signal to a first output apparatus to display a corresponding video picture.

14. The virtual reality dual-mode switching method according to claim 11, wherein
the virtual reality system further comprises an input module electrically connected to an all-in-one machine control module; and
in the virtual reality dual-mode switching method, before the receiving a mode switching instruction, the method further comprises:
receiving instruction information for triggering the mode switching instruction.

15. An electronic device, charactedrized by, comprising:
a processor; and
a memory, configured to store executable instructions of the processor, wherein
the processor is configured to perform the virtual reality dual-mode switching method according to any one of claims 11 to 14.
